# EUROPÄISCHE PATENTSCHRIFT

(11) **EP 3 007 938 B1**
(45) Veröffentlichungstag und Bekanntmachung des Hinweises auf die Patenterteilung: **01.02.2017**
(21) Anmeldenummer: 14732080.8
(22) Anmeldetag: 03.06.2014
(51) Int. Cl.: B60R 21/0134

(54) **SICHERHEITSSYSTEM FÜR EIN KRAFTFAHRZEUG, ZUGEHÖRIGES KRAFTFAHRZEUG UND VERFAHREN ZUM STEUERN EINES SICHERHEITSSYSTEMS FÜR EIN KRAFTFAHRZEUG**
SAFETY SYSTEM FOR A MOTOR VEHICLE, ASSOCIATED MOTOR VEHICLE, AND METHOD FOR CONTROLLING A SAFETY SYSTEM FOR A MOTOR VEHICLE
SYSTÈME DE SÉCURITÉ POUR UN VÉHICULE AUTOMOBILE, VÉHICULE AUTOMOBILE ASSOCIÉ ET PROCÉDÉ SERVANT À COMMANDER UN SYSTÈME DE SÉCURITÉ POUR UN VÉHICULE AUTOMOBILE

(30) Priorität: 11.06.2013 DE 102013009717
(43) Veröffentlichungstag der Anmeldung: 20.04.2016
(73) Patentinhaber: Audi AG, 85045 Ingolstadt (DE)
(72) Erfinder: KUFER, Stefan, 85117 Eitensheim (DE)
(86) Internationale Anmeldenummer: PCT/EP2014/001493
(87) Internationale Veröffentlichungsnummer: WO 2014/198389

(56) Entgegenhaltungen:
- EP-A1- 1 527 959
- EP-A1- 1 591 308
- EP-A1- 1 591 309
- EP-A2- 1 839 960
- DE-A1- 10 212 963
- DE-A1- 10 331 212
- DE-A1-102007 015 768
- DE-A1-102011 108 915
- DE-A1-102011 108 918
- US-A- 6 082 764
- US-B1- 6 463 372

## Beschreibung

Die Erfindung betrifft ein Sicherheitssystem für ein Kraftfahrzeug, umfassend einen mit einer Auswerteeinheit gekoppelten Sensor zum Prognostizieren einer bevorstehenden Kollision, eine Steuerungseinrichtung zum Auslösen einer eine Rückverlagerung wenigstens eines Fahrzeuginsassen bewirkenden ersten Vorrichtung zu einem festgelegten ersten Zeitpunkt vor der prognostizierten Kollision.

Sicherheitssysteme bei Kraftfahrzeugen dienen primär dazu, Fahrzeuginsassen im Falle eines Aufpralls vor Verletzungen zu schützen bzw. derartige Verletzungen zu verringern. Beispiele für derartige Sicherheitssysteme sind Airbags, verschiebbare Lenkanlagen oder Gurtstraffer. Ursprünglich erfolgte die Aktivierung derartiger Sicherheitssysteme erst zeitlich nach einem Aufprall. Mittlerweile sind jedoch auch Sicherheitssysteme vorgeschlagen worden, die bereits im Vorfeld einer Kollision aktiviert werden können.

In der DE 10 2011 108 915 A1 wird eine Rückhaltevorrichtung für ein Kraftfahrzeug beschrieben, durch die ein bevorstehender Aufprall mittels eines Sensors erfasst wird. Bei einem erkannten bevorstehenden Aufprall werden die Fahrzeuginsassen rückverlagert, wodurch ein Geschwindigkeitsunterschied zwischen den Fahrzeuginsassen und dem Fahrzeug zum Zeitpunkt des Aufpralls verringert werden soll. Auf diese Weise soll die Belastung für die Fahrzeuginsassen minimiert werden. Die Rückverlagerung kann durch eine gesteuerte Bewegung des Fahrzeugsitzes erfolgen. Bei diesem Sicherheitssystem findet die Ankoppelphase der Fahrzeuginsassen an die Verzögerung des Fahrzeugs erst nach dem Beginn des Aufpralls statt. Zu Beginn der Kollision ist eine gewisse Elastizität vorhanden. Angestrebt wird allerdings eine möglichst gute Ankopplung des Fahrzeuginsassen an das Fahrzeug, wodurch die auf den Fahrzeuginsassen einwirkenden Kräfte und Beschleunigungen minimiert werden. Das Maß der Ankopplung zwischen einem Fahrzeuginsassen und dem Fahrzeug wird durch den Ride-Down-Effekt bzw. einen entsprechenden RDE-Wert, der zwischen 0% und 100% liegen kann, angegeben. Ein hoher RDE-Wert ist günstig, dieser bedeutet, dass ein Fahrzeuginsasse bereits ab Beginn der Kollision verzögert wird.

Der Erfindung liegt daher die Aufgabe zugrunde, ein Sicherheitssystem für ein Kraftfahrzeug anzugeben, bei dem die Ankopplung eines Fahrzeuginsassen an das Kraftfahrzeug während der Kollision verbessert ist.

Zur Lösung dieser Aufgabe ist bei einem Sicherheitssystem der eingangs genannten Art vorgesehen, dass die Steuerungseinrichtung dazu ausgebildet ist, zu einem festgelegten, auf den ersten Zeitpunkt folgenden zweiten Zeitpunkt vor der prognostizierten Kollision eine eine Gegenkraft auf den wenigstens einen Insassen ausübende zweite Vorrichtung auszulösen.

Das erfindungsgemäße Sicherheitssystem beruht auf zwei zeitlich nacheinander ausgelösten Aktionen. Nach dem Prognostizieren einer bevorstehenden Kollision wird zunächst eine Rückverlagerung wenigstens eines Fahrzeuginsassen initiiert. Dazu wird eine erste Vorrichtung ausgelöst, die diese Rückverlagerung des Fahrzeuginsassen bewirkt. Wichtig ist dabei, dass das Auslösen vor der prognostizierten bevorstehenden Kollision erfolgt. Durch diese Rückverlagerung wird der Fahrzeuginsasse entgegen der Fahrtrichtung verschoben bzw. verlagert, wodurch einerseits die Absolutgeschwindigkeit des Fahrzeuginsassen zum Zeitpunkt des Aufpralls verringert und andererseits die Relativgeschwindigkeit zwischen dem Fahrzeuginsassen und dem ab dem Aufprallzeitpunkt verzögerten Fahrzeug verringert wird.

Bei dem erfindungsgemäßen Sicherheitssystem ist die zweite Vorrichtung als Sitz oder Sitzlehne ausgebildet. Durch das Auslösen der zweiten Vorrichtung, das heißt durch betätigen des Sitzes oder der Sitzlehne, wird die benötigte Gegenkraft erzeugt.

Bei dem erfindungsgemäßen Sicherheitssystem kann es vorgesehen sein, dass die erste und/oder die zweite Vorrichtung so ausgebildet ist, bzw. sind, dass die Gegenkraft bis zur Kollision aufrechterhalten wird. Die vorteilhafte Wirkung des erfindungsgemäßen Sicherheitssystems ergibt sich, wenn die Gegenkraft zumindest bis zum Beginn der Kollision, ggf. auch darüber hinaus, aufrechterhalten wird.

Bei dem erfindungsgemäßen Sicherheitssystem kann es vorgesehen sein, dass die erste Vorrichtung als Gurtstraffer oder Airbag ausgebildet ist. Auf diese Weise kann mittels des Gurtstraffers und/oder des Airbags die gewünschte Rückverlagerung des Fahrzeuginsassen erfolgen.

Vorzugsweise kann der Gurtstraffer des erfindungsgemäßen Sicherheitssystems während der Erzeugung der Gegenkraft sperrbar sein, wodurch die Gegenkraft aufrechterhalten bleibt.

In ähnlicher Weise kann es bei dem erfindungsgemäßen Sicherheitssystem vorgesehen sein, dass der Airbag während der Erzeugung der Gegenkraft keine oder keine geöffnete Abströmöffnung aufweist. Dementsprechend wird durch den an dem Fahrzeuginsassen anliegenden Airbag die Gegenkraft erzeugt und aufrechterhalten.

Im Hinblick auf den zeitlichen Ablauf kann es bei dem erfindungsgemäßen Sicherheitssystem vorgesehen sein, dass der erste Zeitpunkt 300 ms bis 5 ms vor der prognostizierten Kollision liegt. Zu diesem Zeitpunkt wird die erste Vorrichtung ausgelöst. Vorzugsweise kann der erste Zeitpunkt näherungsweise 100 ms vor der prognostizierten Kollision liegen.

Daneben betrifft die Erfindung ein Kraftfahrzeug, das ein Sicherheitssystem der beschriebenen Art aufweist.

Darüber hinaus betrifft die Erfindung ein Verfahren zum Steuern eines Sicherheitssystems für ein Fahrzeug, bei dem eine bevorstehende Kollision mittels eines mit einer Auswerteeinheit gekoppelten Sensors prognostiziert wird und eine eine Rückverlagerung wenigstens eines Fahrzeuginsassen bewirkende erste Vorrichtung zu einem festgelegten ersten Zeitpunkt vor der prognostizierten Kollision durch eine Steuerungseinrichtung ausgelöst wird.

Bei dem erfindungsgemäßen Verfahren ist vorgesehen, dass durch die Steuerungseinrichtung eine eine Gegenkraft auf den wenigstens einen Insassen ausübende zweite Vorrichtung zu einem festgelegten, auf den ersten Zeitpunkt folgenden zweiten Zeitpunkt vor der prognostizierten Kollision ausgelöst wird.

In den Unteransprüchen sind weitere Ausgestaltungen der Erfindung beschrieben.

Weitere Vorteile und Einzelheiten der Erfindung werden nachfolgend anhand eines Ausführungsbeispiels unter Bezugnahme auf die Zeichnungen erläutert. Die Zeichnungen sind schematische Darstellungen und zeigen:
- Fig. 1: die wesentlichen Komponenten eines erfindungsgemäßen Sicherheitssystems;
- Fig. 2: das in Fig. 1 gezeigte Sicherheitssystem nach dem Auslösen der ersten Vorrichtung;
- Fig. 3: das in Fig. 1 gezeigte Sicherheitssystem nach dem Auslösen der zweiten Vorrichtung; und
- Fig. 4: ein Diagramm, in dem der zeitliche Ablauf der wesentlichen Schritte des erfindungsgemäßen Verfahrens zum Steuern eines Sicherheitssystems dargestellt ist.

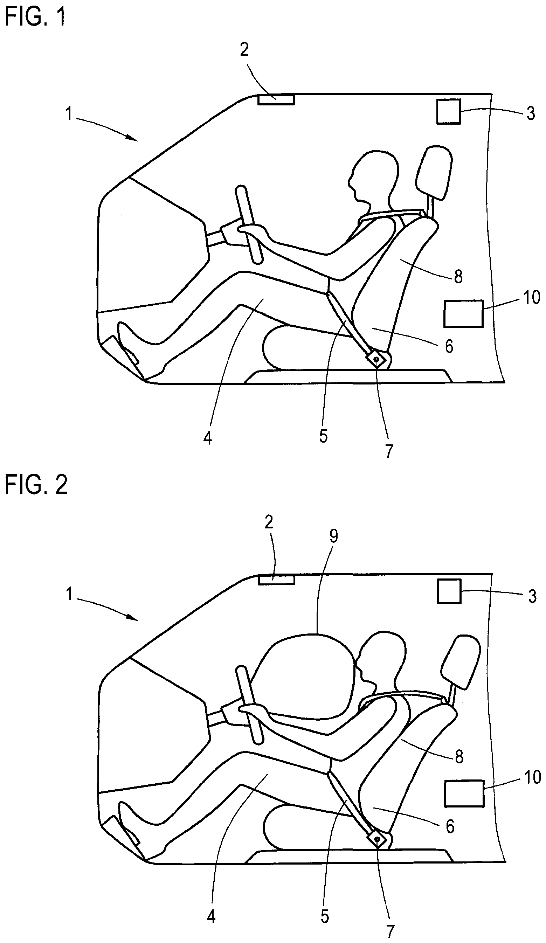

Fig. 1 zeigt die wesentlichen Komponenten eines Sicherheitssystems für ein teilweise dargestelltes Kraftfahrzeug 1, umfassend einen als Kamera ausgebildeten Sensor 2, dessen Bilddaten in einer Auswerteeinheit 3 verarbeitet werden. Durch die Auswertung der Bilddaten in der Auswerteeinheit 3 kann eine bevorstehende Kollision mit einem anderen Fahrzeug prognostiziert werden. Diese Prognose umfasst die Feststellung, dass eine Kollision unvermeidbar stattfinden wird, zum Beispiel, da der Abstand der beiden sich annähernden Fahrzeuge nicht ausreicht, um vor einer Kollision eine Bremsung bis zum Stillstand durchzuführen. In Fig. 1 erkennt man, dass ein Fahrzeuginsasse 4 durch einen Sicherheitsgurt 5 auf einem Fahrzeugsitz 6 gehalten ist.

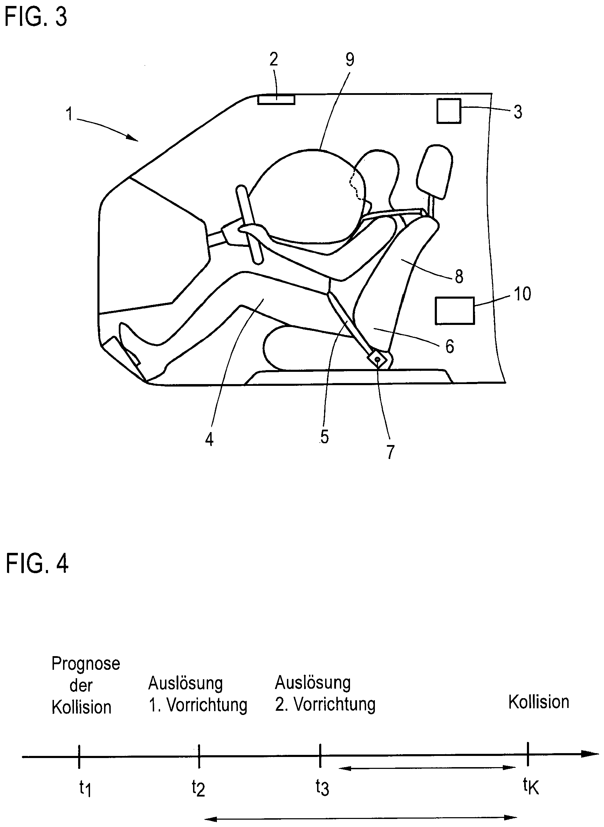

Nachfolgend wird auch auf Fig. 4 Bezug genommen. Fig. 4 ist ein Diagramm, in dem der zeitliche Ablauf der Schritte des Verfahrens zum Steuern des Sicherheitssystems dargestellt ist. Von der Auswerteeinheit 3 wurde prognostiziert, dass zum Zeitpunkt tₖ eine unvermeidbare Kollision stattfinden wird.

Das in Fig. 1 gezeigte Kraftfahrzeug 1 umfasst eine erste als Gurtstraffer 7 ausgebildete Vorrichtung, nach deren Auslösung eine Rückverlagerung des Fahrzeuginsassen 4 erfolgt. In dem dargestellten Ausführungsbeispiel wird zum Zeitpunkt t₁ die bevorstehende Kollision prognostiziert. Zum Zeitpunkt t₂ wird die erste, als Gurtstraffer 7 ausgebildete Vorrichtung durch eine Steuerungseinrichtung 10 ausgelöst. In dem dargestellten Ausführungsbeispiel erfolgt das Auslösen der ersten Vorrichtung 50 ms vor dem Zeitpunkt der Kollision. Dieser Wert ist allerdings nicht als Beschränkung zu verstehen, bei anderen Ausführungsbeispielen oder abgewandelten Sicherheitssystemen kann der Zeitpunkt der Auslösung der ersten Vorrichtung zum Beispiel 300 ms oder 5 ms vor der prognostizierten Kollision liegen.

Durch das Straffen des Gurtstraffers 7 wird der Fahrzeuginsasse 4 fester zum Fahrzeugsitz 6, insbesondere gegen die Rückenlehne 8 gezogen. Wie in Fig. 2 gezeigt ist, kommt es auf diese Weise zu einer Rückverlagerung des Oberkörpers des Fahrzeuginsassen 4, wobei dieser entgegen der Fahrtrichtung bewegt bzw. beschleunigt wird. Zugleich wird ein Airbag 9 ausgelöst, so dass der Fahrzeuginsasse 4 durch eine Kraft beaufschlagt wird, die ihn entgegen der Fahrtrichtung nach hinten drückt, wodurch die Rückverlagerung unterstützt wird.

Zum Zeitpunkt t₃ wird eine zweite Vorrichtung ausgelöst, durch die eine Gegenkraft auf den Fahrzeuginsassen 4 ausgeübt wird. In dem dargestellten Ausführungsbeispiel wird die Rückenlehne 8 derart angesteuert, dass auf den Fahrzeuginsassen 4 die gewünschte Gegenkraft ausgeübt wird. In dem dargestellten Ausführungsbeispiel wird die Rückenlehne 8 im Gegenuhrzeigersinn verfahren.

In dem dargestellten Ausführungsbeispiel wird die zweite Vorrichtung 50 ms vor dem berechneten Zeitpunkt der Kollision tₖ ausgelöst. Die durch die Verstellung der Rückenlehne 8 erzeugte Gegenkraft wird zumindest bis zum Zeitpunkt der Kollision aufrechterhalten, wodurch die Elastizität des Sicherheitsgurts 5 des Fahrzeugsitzes 6 sowie der Kleidung des Fahrzeuginsassen 4 verringert wird. Dasselbe gilt für gefährdete Körperteile wie z. B. Brustkorb und Becken. Da der Fahrzeuginsasse 4 zum Zeitpunkt des Beginns der Kollision rückverlagert ist und durch die aufgebrachte Gegenkraft festgehalten wird, nimmt er ab dem Aufprall an der Verzögerung des Kraftfahrzeugs 1 teil, wodurch die Gefahr von Verletzungen beträchtlich verringert wird.

## Patentansprüche

1. Sicherheitssystem für ein Kraftfahrzeug (1), umfassend einen mit einer Auswerteeinheit (3) gekoppelten Sensor (2) zum Prognostizieren einer bevorstehenden Kollision, eine Steuerungseinrichtung (10) zum Auslösen einer eine Rückverlagerung wenigstens eines Fahrzeuginsassen (4) bewirkenden ersten Vorrichtung zu einem festgelegten ersten Zeitpunkt vor der prognostizierten Kollision, wobei die Steuerungseinrichtung (10) dazu ausgebildet ist, zu einem festgelegten, auf den ersten Zeitpunkt folgenden zweiten Zeitpunkt vor der prognostizierten Kollision eine eine Gegenkraft auf den wenigstens einen Fahrzeuginsassen (4) ausübende zweite Vorrichtung auszulösen,
**dadurch gekennzeichnet,**
**dass** die zweite Vorrichtung als Fahrzeugsitz oder Rückenlehne (8) ausgebildet ist.

2. Sicherheitssystem nach Anspruch 1,
**dadurch gekennzeichnet,**
**dass** die erste und/oder die zweite Vorrichtung so ausgebildet ist bzw. sind, dass die Gegenkraft bis zur Kollision aufrechterhalten wird.

3. Sicherheitssystem nach Anspruch 1 oder 2,
**dadurch gekennzeichnet,**
**dass** die erste Vorrichtung einen Gurtstraffer (7) und/oder einen Airbag (9) umfasst.

4. Sicherheitssystem nach Anspruch 3,
**dadurch gekennzeichnet,**
**dass** der Gurtstraffer (7) während der Erzeugung der Gegenkraft sperrbar ist.

5. Sicherheitssystem nach Anspruch 3 oder 4,
**dadurch gekennzeichnet,**
**dass** der Airbag (9) während der Erzeugung der Gegenkraft keine oder keine geöffnete Abströmöffnung aufweist.

6. Sicherheitssystem nach einem der vorangehenden Ansprüche,
**dadurch gekennzeichnet,**
**dass** der erste Zeitpunkt 300 ms bis 5 ms, vorzugsweise näherungsweise 100 ms vor der Kollision liegt.

7. Kraftfahrzeug (1), umfassend ein Sicherheitssystem nach einem der Ansprüche 1 bis 6.

8. Verfahren zum Steuern eines Sicherheitssystems für ein Kraftfahrzeug (1), bei dem eine bevorstehende Kollision mittels eines mit einer Auswerteeinheit (3) gekoppelten Sensors (2) prognostiziert wird und eine eine Rückverlagerung wenigstens eines Fahrzeuginsassen (4) bewirkende erste Vorrichtung zu einem festgelegten ersten Zeitpunkt vor der prognostizierten Kollision durch eine Steuerungseinrichtung (10) ausgelöst wird, wobei durch die Steuerungseinrichtung (10) eine eine Gegenkraft auf den wenigstens einen Insassen ausübende zweite Vorrichtung zu einem festgelegten, auf den ersten Zeitpunkt folgenden zweiten Zeitpunkt vor der prognostizierten Kollision ausgelöst wird,
**dadurch gekennzeichnet,**
**dass** ein Fahrzeugsitz oder eine Rückenlehne (8) als zweite Vorrichtung verwendet wird.

9. Verfahren nach Anspruch 8,
**dadurch gekennzeichnet,**
**dass** die Gegenkraft durch die erste und/oder die zweite Vorrichtung wenigstens bis zur Kollision aufrechterhalten wird.

10. Verfahren nach Anspruch 8 oder 9,
**dadurch gekennzeichnet,**
**dass** ein Gurtstraffer (7) und/oder ein Airbag (9) als erste Vorrichtung verwendet wird, wobei der Gurtstraffer (7) während der Erzeugung der Gegenkraft vorzugsweise gesperrt wird und/oder der Airbag (9) während der Erzeugung der Gegenkraft vorzugsweise keine oder keine geöffnete Abströmöffnung aufweist.

## Claims

1. Safety system for a motor vehicle (1), comprising a sensor (2) for predicting an imminent collision, which sensor is coupled to an evaluating unit (3), a control apparatus (10) for triggering a first device at a defined first time before the predicted collision, which causes a rearward displacement of at least one vehicle occupant (4), wherein the control apparatus (10) is designed to trigger a second device at a defined second time before the predicted collision which follows the first time, which second device applies a counter force to the at least one vehicle occupant (4), **characterized in that** the second device is designed as an automobile seat or backrest (8).

2. Safety system according to claim 1, **characterized in that** the first and/or the second device is or are designed so that the counter force is maintained until the collision.

3. Safety system according to claim 1 or 2, **characterized in that** the first device comprises a seat belt pretensioner (7) and/or an airbag (9).

4. Safety system according to claim 3, **characterized in that** the seat belt pretensioner (7) can be disabled while the counter force is being generated.

5. Safety system according to claim 3 or 4, **characterized in that** while the counter force is being generated the airbag (9) has no or no opened air discharge opening.

6. Safety system according to any one of the preceding claims, **characterized in that** the first time is 300 ms - 5 ms, preferably approximately 100 ms prior to the collision.

7. Motor vehicle (1), comprising a safety system according to one of claims 1 - 6.

8. Method for controlling a safety system for a motor vehicle (1), wherein an imminent collision is predicted by means of a sensor (2) coupled to an evaluating unit (3) and a first device is triggered at a defined first time before the predicted collision, by a control device (10), which causes a rearward displacement of at least one vehicle occupant (4), wherein the control device (10) triggers a second device, at a defined second time before the predicted collision which follows the first time, which second device applies a counter force to the at least one vehicle occupant, **characterized in that** an automobile seat or backrest (8) is used as the second device.

9. Method according to claim 8, **characterized in that** the counter force is maintained by the first and/or the second device at least until the collision.

10. Method according to claim 8 or 9, **characterized in that** a seat belt pretensioner (7) and/or an airbag (9) is used as the first device, wherein the seat belt pretensioner (7) is preferably disabled while the counter force is being generated and/or the airbag (9) has no or no opened air discharge opening.

## Revendications

1. Système de sécurité pour un véhicule automobile (1), comprenant un capteur (2) couplé à une unité d'évaluation (3) pour anticiper une collision imminente, un système de commande (10) pour déclencher un premier dispositif, provoquant un déplacement vers l'arrière d'au moins un occupant de véhicule (4), à un premier instant spécifié antérieur à la collision anticipée, le système de commande (10) étant réalisé pour déclencher un deuxième dispositif, exerçant une force opposée sur l'au moins un opposant de véhicule (4), à un deuxième instant spécifié qui est postérieur au premier instant et antérieur à la collision anticipée,
**caractérisé en ce**
**que** le deuxième dispositif est réalisé sous la forme d'un siège de véhicule ou d'un dossier (8).

2. Système de sécurité selon la revendication 1,
**caractérisé en ce**
**que** le premier et/ou le deuxième dispositif est ou sont réalisés de telle sorte que la force opposée est maintenue jusqu'à la collision.

3. Système de sécurité selon la revendication 1 ou 2,
**caractérisé en ce**
**que** le premier dispositif comprend un prétensionneur de ceinture (7) et/ou un coussin gonflable de sécurité (9).

4. Système de sécurité selon la revendication 3,
**caractérisé en ce**
**que** le prétensionneur de ceinture (7) peut être bloqué pendant la production de la force opposée.

5. Système de sécurité selon la revendication 3 ou 4,
**caractérisé en ce**
**que**, pendant la production de la force opposée, le coussin gonflable de sécurité (9) ne présente aucun orifice de flux sortant ou aucun orifice de flux sortant ouvert.

6. Système de sécurité selon l'une quelconque des revendications précédentes,
**caractérisé en ce**
**que** le premier instant va de 300 ms à 5 ms, de préférence est approximativement de 100 ms avant la collision.

7. Véhicule automobile (1), comprenant un système de sécurité selon l'une quelconque des revendications 1 à 6.

8. Procédé pour commander un système de sécurité pour un véhicule automobile (1), où une collision imminente est anticipée au moyen d'un capteur (2) couplé à une unité d'évaluation (3), et un premier dispositif provoquant un déplacement en arrière d'au moins un occupant de véhicule (4) est déclenché, à un premier instant spécifié antérieur à la collision anticipée par un système de commande (10), un deuxième dispositif exerçant une force opposée sur l'au moins un occupant étant déclenché par le système de commande (10) à un deuxième instant spécifié postérieur au premier instant et antérieur à la collision anticipée, **caractérisé en ce**
**qu'**un siège de véhicule ou un dossier (8) est utilisé comme deuxième dispositif.

9. Procédé selon la revendication 8,
**caractérisé en ce**
**que** la force opposée est maintenue par le premier et/ou le deuxième dispositif au moins jusqu'à la collision.

10. Procédé selon la revendication 8 ou 9,
**caractérisé en ce**
**qu'**un prétensionneur de ceinture (7) et/ou un coussin gonflable de sécurité (9) sont utilisés comme premier dispositif, le prétensionneur de ceinture (7) étant de préférence bloqué pendant la production de la force opposée et/ou le coussin gonflable de sécurité (9) ne présentant de préférence aucun orifice de flux sortant ou aucun orifice de flux sortant ouvert pendant la production de la force opposée.
